# FASCICULE DE BREVET EUROPEEN

(11) **EP 0 902 546 B1**
(45) Date de publication et mention de la délivrance du brevet: **09.04.2008**
(21) Numéro de dépôt: 97115772.2
(22) Date de dépôt: 11.09.1997
(51) Int. Cl.: H04B 1/00, H04L 29/08, H04L 7/06

(54) **Protocole de communication entre une unité émettrice-réceptrice et des répondeurs**
Kommunikationsprotokoll zwischen einer Sende-Empfangseinheit und Transpondern
Communication protocol between a transmitter-receiver unit and transponders

(43) Date de publication de la demande: 17.03.1999
(73) Titulaire: EM Microelectronic-Marin SA, 2074 Marin (CH)
(72) Inventeur: Fuentes, Vincent, 2025 Chez-Le-Bart (CH)
(74) Mandataire: Balsters, Robert

(56) Documents cités:
- EP-A- 0 266 285
- US-A- 3 980 825
- US-A- 5 144 314

## Description

La présente invention concerne un protocole de communication entre une ou plusieurs unité(s) émettrice(s)-réceptrice(s) et des répondeurs ou récepteurs-émetteurs. Les répondeurs ou récepteurs-émetteurs (angl. transponders) répondent à une unité émettrice-réceptrice en entrant dans son champ d'action et interagissent avec cette dernière selon un protocole donné, associé à un codage défini des commandes et informations échangées entre cette unité émettrice-réceptrice (ci-après unité de communication) et ces répondeurs ou récepteurs-émetteurs (ci-après nommés transpondeurs).

De manière usuelle, le codage des commandes et de l'information échangée est opéré selon un mode binaire, c'est-à-dire une succession de bits logiques "1" et de bits logiques "0". La transmission de ces bits logiques est effectuée au moyen d'un signal électromagnétique de codage connu de l'homme du métier. Par exemple, ces bits sont transmis par modulation ou non-modulation de l'onde porteuse. On connaît par exemple les codages du type Manchester, Miller, differential Bi-phase (selon le terme anglais) qui s'appliquent à des modulations d'amplitude (ASK:amplitude shift keying), de phase (PSK:phase shift keying), de fréquence (FSK: frequency shift keying) et d'autres encore connues de l'homme du métier.

Pour l'échange de données entre un lecteur et des transpondeurs, il est connu notamment des documents US 5,144,314 et EP 0 266 285 d'envoyer des séquences de bits avec un format prédéfini. De manière à assurer une synchronisation entre le lecteur et les transpondeurs, ce format prévoit dans la partie initiale de chaque séquence de bits à communiquer un signal de synchronisation spécifique. Ce signal de synchronisation ne porte pas en lui-même d'information. Ainsi, toute séquence de bits prévue dans le protocole de communication débute par une en-tête caractéristique assurant une synchronisation entre le lecteur et un transpondeur considéré.

Le protocole de communication définit l'échange de commandes et de données ou d'informations entre une ou plusieurs unité(s) de communication et un ou plusieurs transpondeur(s).

Certains protocoles de communication comportent des procédures d'identification ou de transmission de données composées de très longues séquences de bits formées de bits aléatoires et de bits représentant des fonctions calculées à l'aide d'algorithmes donnés à partir de ces séquences de bits aléatoires et, éventuellement, de certaines clés publiques ou secrètes. La probabilité est non négligeable qu'une unité de communication génère lors de l'émission des séquences de bits susmentionnées une séquence correspondant à une commande valide du système lors de la transmission de données ou d'informations autres qu'une commande. De telles situations probables résultent en un mauvais fonctionnement du système lorsque plusieurs transpondeurs entrent dans un même intervalle temporel dans le champ d'action d'une unité de communication.

De plus, il est possible que des transpondeurs associés à des systèmes différents entrent dans le champ d'action d'une unité de communication appartenant à un système particulier. Dans un tel cas, il est nécessaire d'éviter que l'unité entre en relation avec ces transpondeurs, ce qui provoquerait des réponses non-désirées et perturberait les échanges d'informations souhaités. Plus précisément, une unité de communication reçoit dans son champ d'action simultanément un transpondeur associé au système de cette unité et un autre transpondeur associé à un autre système. Si les commandes et les échanges de données s'effectuent selon un même codage et une même structure temporelle du codage, une partie au moins du signal d'interrogation peut correspondre à une commande activant le transpondeur appartenant audit autre système, ce dernier commençant à moduler. Ceci crée une perturbation et une confusion dans la partie réceptrice de ladite unité de communication, ce qui empêche une lecture correcte du transpondeur associé au système de cette unité.

Même dans le cas ou les transpondeurs comportent un protocole d'anti-collision, le risque d'interaction entre une unité de communication et des transpondeurs non associés au système de cette unité reste présent car il existe une multitude de protocoles différents.

Pour solutionner les problèmes susmentionnés en évitant à des tranpondeurs d'entrer en interaction ou d'échanger des données avec une unité de communication appartenant à un système différent, la présente invention propose un protocole de communication entre au moins une unité de communication et des tranpondeurs, associés au système de communication de cette unité et agencés pour échanger avec cette unité des informations codées, dans lequel il est prévu que ladite unité de communication envoie au moins une commande initiale pour établir une communication avec lesdits tranpondeurs entrant dans son champ d'action, cette commande initiale présentant au moins partiellement un codage avec une structure temporelle spécifique qui est différente de la structure temporelle de base utilisée pour coder des informations autres que ladite au moins une commande.

Il résulte des caractéristiques du protocole selon l'invention que la partie du codage de la commande initiale présentant une structure temporelle spécifique différente de la structure temporelle de base utilisée pour le codage des informations échangées, en particulier des informations autres que des commandes, permet d'éviter qu'une séquence présentant une distribution de bits aléatoires pour l'échange d'une information quelconque soit confondu avec une commande d'une unité de communication servant à établir une interaction avec des transpondeurs. Ainsi, aucun transpondeur ne sera activé par un échange d'informations codées entre un autre transpondeur et une unité de communication pour autant que tous les transpondeurs présents dans le champs d'action de l'unité de communication soit agencés de manière à interagir avec cette unité qu'à la suite de la réception d'un signal de commande présentant au moins partiellement un codage avec une structure temporelle spécifique selon la présente invention.

La présente invention apporte donc une solution fiable et efficace dans le cas d'un consensus entre les différents producteurs et fournisseurs d'unités de communication et de transpondeurs pour le moins en ce qui concerne les systèmes ou les applications similaires ou ayant une probabilité non négligeable de cohabiter momentanément dans un même endroit ou espace.

Il a été mentionné ci-avant qu'au moins la commande initiale présentait au moins en partie un codage avec une structure temporelle spécifique, mais plusieurs variantes sont possibles et peuvent être mises en oeuvre sans difficulté particulière par l'homme du métier. En particulier, il est possible de prévoir que toutes commandes présentent au moins partiellement un codage avec une structure temporelle spécifique selon la présente invention. Il est également possible de prévoir que la commande initiale ou toutes commandes présentent seulement un bit initial et éventuellement un bit final selon la structure temporelle spécifique ou tous les bits codés avec cette structure temporelle spécifique. Dans un mode de mise en oeuvre particulier, la commande initiale et la commande finale d'un échange de données entre une unité de communication et les transpondeurs qui lui sont associée présentent au moins partiellement un codage avec une structure temporelle spécifique différente de la structure temporelle de base. Dans un mode de mise en oeuvre préféré, au moins chaque premier bit ou bit initial de toute commande est engendré sur la base de la structure temporelle spécifique selon l'invention.

On remarquera qu'il est également possible au moins dans le cas de transpondeurs actifs, de prévoir que des commandes et/ou au moins une réponse initiale envoyée à une unité soient générées selon un codage présentant une structure temporelle spécifique selon la présente invention. L'homme du métier qui comprend la présente invention saura l'appliquer de manière appropriée et efficace selon les divers systèmes et protocoles en présence sans pour autant sortir du cadre de la présente invention.

Selon un mode de mise en oeuvre préféré du protocole selon l'invention, ladite structure temporelle spécifique présente une période temporelle de codage supérieure à la période temporelle de codage utilisée de la structure temporelle de base. En particulier, cette structure temporelle spécifique présente au cours d'au moins une période temporelle de codage une valeur électrique caractéristique qui est constante sur un intervalle de temps supérieur à toute longueur temporelle ou durée de cette valeur électrique caractéristique pouvant intervenir dans le(s) codage(s) prévu(s) avec ladite structure temporelle de base.

Il résulte de cette dernière caractéristique que la structure temporelle spécifique prévue pour ladite au moins commande initiale ne peut en aucun cas correspondre au codage d'une information quelconque avec la structure temporelle de base.

La présente invention sera encore mieux comprise à l'aide de la description suivante, faite en référence aux dessins annexés donnés à titre d'exemple nullement limitatifs, dans lesquels :
- la figure 1 représente un codage de type Manchester dans le cas d'une modulation d'amplitude;
- la figure 2 représente divers types de codages connus;
- la figure 3 montre schématiquement un premier mode de mise en oeuvre du protocole selon l'invention;
- la figure 4 montre schématiquement un deuxième mode de mise en oeuvre de la présente invention;
- la figure 5 montre schématiquement une variante de mise en oeuvre de la présente invention.

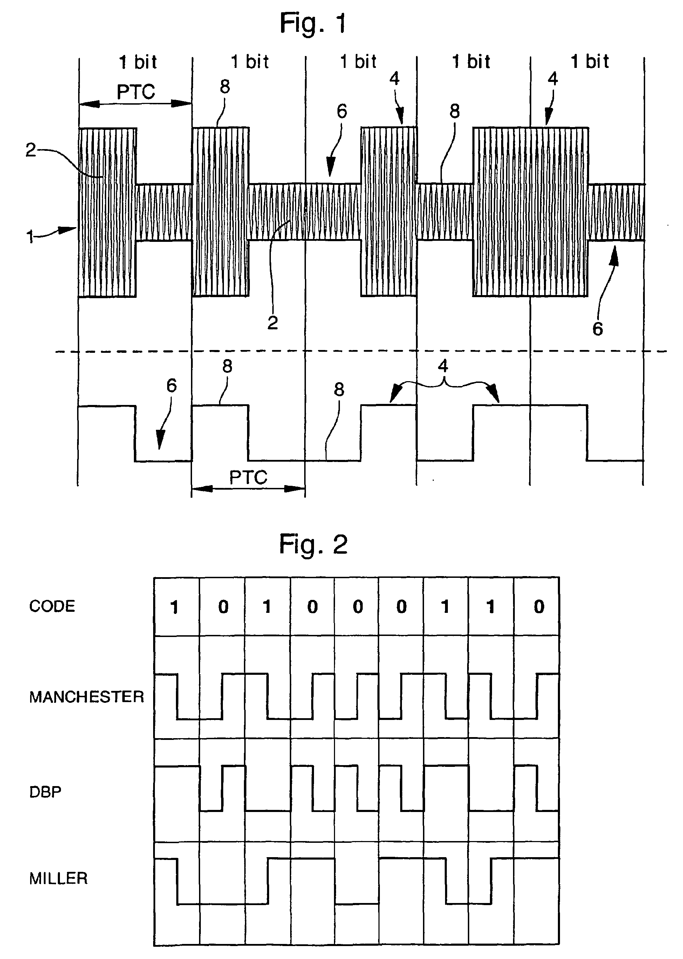

A l'aide des figures 1 et 2, on rappellera ci-après brièvement le principe de codage par modulation d'amplitude et divers types de codage pouvant être utilisés dans le cadre de la présente invention.

A la figure 1, dans la partie supérieure est représentée un signal électromagnétique servant à communiquer des données codées entre une unité de communication et un transpondeur quelconque parmi une pluralité de transpondeurs associés à cette unité où à son système de fonctionnement. Le signal codé de manière binaire est obtenu par modulation d'amplitude ou les bits sont fournis avec une fréquence déterminée définissant une période temporelle de codage PTC déterminée. Le signal électromagnétique est défini par une onde porteuse 2 qui est modulée en amplitude entre un niveau haut 4 et un niveau bas 6 dans le cas d'un codage du type Manchester. Une transition entre un niveau haut et un niveau bas ou inversement est opérée à l'intérieur de chaque période temporelle de codage PTC. Un bit "1" correspond à une transition d'un niveau haut vers un niveau bas, alors qu'un bit "0" correspond à une transition d'un niveau bas vers un niveau haut. Dans la partie inférieure de la figure 1 est représentée uniquement l'enveloppe supérieure 8 du signal 1. Par la suite, seule la représentation schématique de l'enveloppe supérieure du signal électromagnétique de codage est représentée pour l'exposé de la présente invention.

A la figure 2 sont représentés trois types de codage dans le cas d'une modulation d'amplitude ou le niveau haut correspond à une non-modulation alors que le niveau bas correspond à une modulation du signal électromagnétique de codage. Ainsi, pour un code donné à titre d'exemple, on a représenté les enveloppes supérieures du signal de codage pour les types de codage Manchester, DBP correspondant à l'expression anglaise "differential Bi-phase" et Miller pouvant tous trois avantageusement être utilisés dans le cadre de la présente invention. En analysant les signaux codés de la figure 2, on remarque que le niveau haut ou le niveau bas présente une longueur temporelle dont la valeur est au maximum égale à une période temporelle de codage PTC dans le cadre des codes Manchester ou DBP et au maximum à deux périodes temporelles de codage dans le cas du type de codage Miller.

Selon la présente invention, il est prévu qu'au moins une commande initiale envoyée par ladite unité de communication présente au moins partiellement un codage avec une structure temporelle spécifique qui est différente de la structure temporelle de base utilisée notamment pour coder les informations codées autres que les commandes. Partant de la constatation que la durée d'un même état (niveau haut ou niveau bas) est limitée temporellement quelque soit la longueur des séquences de bits et de leurs distributions au sein de chaque séquence, la présente invention propose dans des modes de mise en oeuvre préférées de varier la période temporelle de codage au moins partiellement pour au moins une commande initiale envoyée par une unité de communication pour engendrer une interaction ou établir une communication avec des transpondeurs qui lui sont associés. En d'autre termes, il est prévu au moins pour la commande initiale une structure temporelle spécifique relativement à la structure temporelle de base.

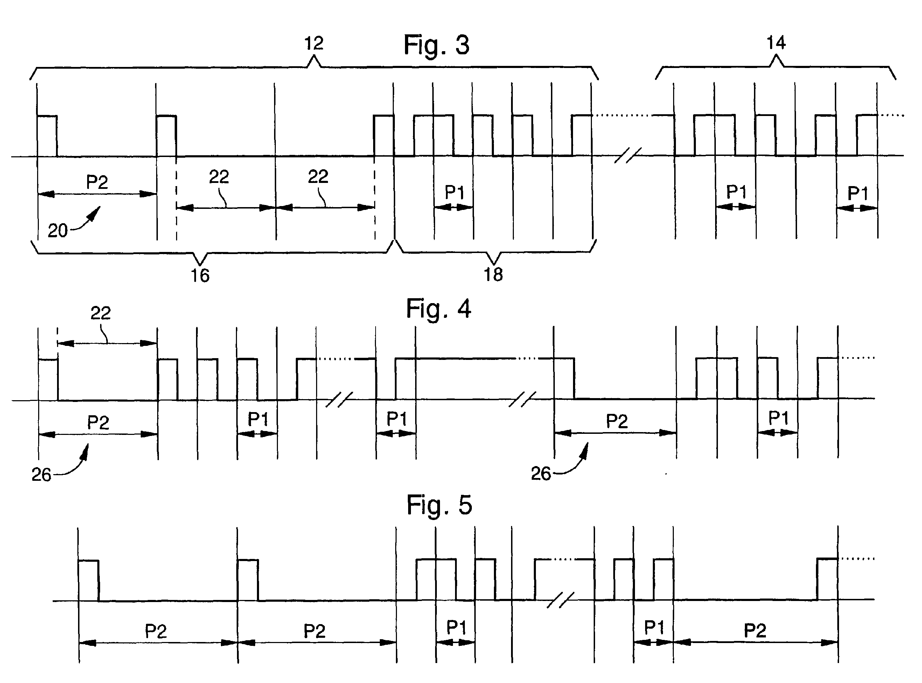

A la figure 3 est représenté un premier mode de mise en oeuvre du protocole de communication selon l'invention dans le cas nullement limitatif d'une modulation en amplitude. Un premier signal de commande 12, nommé ci-avant commande initiale, présente une première partie 16 codée à l'aide d'une structure temporelle spécifique dont la période temporelle de codage P2 est supérieure à la période temporelle de codage P1 de la structure temporelle de base. La commande initiale 12 présente donc une première partie 16 avec une structure temporelle spécifique à cette commande initiale et une seconde partie 18 avec une structure temporelle de base. Comme cela a déjà été mentionné ci-avant, sans sortir du cadre et de la présente invention, diverses variantes peuvent être choisies par l'homme du métier. En particulier, seul un premier bit initial peut avoir la structure temporelle spécifique susmentionnée ou au contraire tous les bits de cette commande initiale. Dans le mode de mise en oeuvre de la figure 3, seule la commande initiale présente au moins partiellement une structure temporelle spécifique les autres informations codées 14 ont la structure temporelle de base. Afin d'éviter tout risque de confusion entre les parties fournies avec la structure temporelle spécifique et n'importe quelle séquence aléatoire de bits fournie avec la structure temporelle de base, il est prévu selon l'invention que la structure temporelle spécifique présente au cours d'au moins une première période temporelle de codage 20 une valeur électrique caractéristique qui est constante sur un intervalle de temps 22 supérieur à la longueur temporelle de toute valeur électrique caractéristique constante pouvant intervenir dans la structure temporelle de base. L'intervalle de temps 22 forme une sous-période de la période temporelle de codage P2 et différencie totalement la structure temporelle spécifique de la structure temporelle de base, et notamment de toute combinaison de bit pouvant intervenir dans une séquence de bit générée avec la structure temporelle de base.

En particulier dans le cas où le type de codage utilisé est l'un de ceux représenté à la figure 2, il est prévu que l'intervalle de temps 22 est égal à 2 1/2 fois la période temporelle de codage P1 de la structure temporelle de base. Dans une variante, il est possible d'augmenter l'intervalle de temps 22 de manière à ce qu'il soit supérieur à 2.5 la période temporelle de codage P1. En effet, dans le cadre de la présente invention, il suffit que l'intervalle de temps 22 soit supérieur à la durée ou longueur temporelle de toute valeur électrique caractéristique constante pouvant intervenir dans le codage effectué avec la structure temporelle de base. La valeur électrique caractéristique constante sur l'intervalle de temps 22 correspond à un niveau bas du signal électrique modulé en amplitude.

Le type de codage utilisé aux figures 3 à 5 correspond au type Manchester et on remarquera que le principe de codage et les transitions entre le niveau haut et le niveau bas ou réciproquement est similaire dans la partie 16 et dans la partie 18 du premier signal de commande 12, ainsi que dans le signal électrique modulé 14 définissant une information codée échangée suite à la commande initiale. Il est envisageable de prévoir dans la structure temporelle spécifique un codage différent de celui utilisé dans le cadre de la structure temporelle de base. Toutefois, étant donné qu'un aspect essentiel de la présente invention concerne la structure temporelle du codage, le mélange de divers type de codage ne fait pas l'objet premier de la présente invention.

A la figure 4 est représenté schématiquement un deuxième mode de mise en oeuvre du protocole de communication selon l'invention dans lequel toute commande envoyée par l'unité de communication présente un bit initial 26 avec une structure temporelle spécifique telle que décrite précédemment à l'aide de la figure 3. Dans des variantes de réalisation et en particulier dans la variante représentée dans la figure 5, chaque commande présente une première partie et un bit terminal avec une structure temporelle spécifique. Entre le bit initial et le bit terminal de chaque commande, il peut être prévu soit une structure temporelle de base, soit un mélange de la structure temporelle de base et de la structure temporelle spécifique. Finalement, toutes les commandes peuvent présenter intégralement une structure temporelle spécifique telle que décrite ci-avant.

Bien que les exemples donnés aux figures 3 à 5 ont été faits en référence à un signal électrique de communication modulé en amplitude, il est bien entendu que la présente invention s'applique également aux autres modes connus utilisant les mêmes types de codage, notamment les signaux électromagnétiques modulés en phase ou modulés en fréquence.

## Revendications

1. Procédé de communication entre au moins une unité émettrice-réceptrice de signaux électromagnétiques et des répondeurs ou récepteurs-émetteurs associés à cette unité et agencés pour recevoir de cette unité au moins une commande initiale d'activation de la communication (12) et pour échanger avec cette unité des informations codées (14) autres que des commandes, ladite commande initiale étant fournie par ladite unité émettrice-réceptrice pour engendrer une interaction avec lesdits répondeurs ou récepteurs-émetteurs entrant dans son champ d'action, **caractérisé en ce que** ladite au moins une commande initiale présente au moins partiellement un codage avec une structure temporelle spécifique (16) qui est différente de la structure temporelle de base (14, 18) utilisée pour générer lesdites informations codées, ladite au moins une commande initiale étant différente de toute séquence de bits pouvant intervenir dans la fourniture d'une quelconque desdites informations codées par ladite unité émettrice-réceptrice.

2. Procédé de communication selon la revendication 1, **caractérisé en ce que** ladite structure temporelle spécifique présente une période temporelle de codage (P2) qui est supérieure à la période temporelle de codage (P1) utilisée dans ladite structure temporelle de base.

3. Procédé de communication selon la revendication 2, **caractérisé en ce que** ladite structure temporelle spécifique présente au cours d'au moins une première période temporelle de codage (20; 26) une valeur électrique caractéristique qui est constante sur un intervalle de temps (22) supérieur à toutes les longueurs temporelles de cette valeur électrique caractéristique pouvant intervenir dans n'importe quelle séquence de bits avec ladite structure temporelle de base.

4. Procédé de communication selon la revendication 3, **caractérisé en ce que** ledit intervalle de temps (22) est supérieur ou égal à 2.5 fois la période temporelle de codage (P1) de ladite structure temporelle de base.

5. Procédé de communication selon la revendication 3 ou 4, **caractérisé en ce que** ladite valeur électrique caractéristique correspond à un niveau bas du signal électromagnétique de codage des commandes et des informations échangées entre ladite unité émettrice-réceptrice et lesdits répondeurs ou récepteurs-émetteurs.

6. Procédé de communication selon l'une des revendications précédentes, **caractérisé en ce que** le type de codage utilisé avec ladite structure temporelle spécifique et ladite structure temporelle de base est le même, les transitions prévues entre le niveau haut et le niveau bas du signal électromagnétique de codage échangé entre ladite unité émettrice-réceptrice et lesdits répondeurs ou récepteurs-émetteurs étant identiques pour caractériser un bit "0" et un bit "1".

7. Procédé de communication selon l'une des revendications précédentes, **caractérisé en ce que** ladite commande initiale présente ladite structure temporelle spécifique au moins dans sa partie initiale (16).

8. Procédé de communication selon l'une des revendications précédentes, **caractérisé en ce que** toutes les commandes envoyées par ladite unité émettrice-réceptrice présentent chacune au moins partiellement un codage (26) avec ladite structure temporelle spécifique.

9. Procédé de communication selon la revendication 8, **caractérisé en ce que** toutes lesdites commandes présentent chacune ladite structure temporelle spécifique au moins dans leurs parties initiales (26).

10. Procédé de communication selon la revendication 8 ou 9, **caractérisé en ce que** toutes lesdites commandes sont codées avec ladite structure temporelle spécifique.

## Claims

1. Communication method between at least one electromagnetic signal transceiver unit and transponders or transceivers associated with said unit and arranged for receiving from said unit at least one initial command (12) for activating the communication and for exchanging coded data other than commands with said unit, said initial command being supplied by said transceiver unit to generate interaction with said transponders or transceivers entering its field of action, **characterised in that** said at least one initial command has at least partially a coding with a specific time structure (16) which is different from the basic time structure (14, 18) used for encoding said coded data, said at least one initial command being different from any bit sequences able to intervene in the supply of any of said coded information by said transceiver unit.

2. Communication method according to claim 1,
**characterised in that** said specific time structure has a coding time period (P2) which is greater than the coding time period (P1) used in said basic time structure.

3. Communication method according to claim 2,
**characterised in that**, during at least a first coding time period (20; 26), said specific time structure has a characteristic electric value which is constant over a time interval (22) greater than all the lengths of time of said characteristic electric value able to appear in any bit sequence with said basic time structure.

4. Communication method according to claim 3,
**characterised in that** said time interval (22) is greater than or equal to 2.5 times the coding time period (P1) of said basic time structure.

5. Communication method according to claim 3 or 4, **characterised in that** said characteristic electric value corresponds to a low level of the electromagnetic coding signal for the commands and data exchanged between said transceiver unit and said transponders or transceivers.

6. Communication method according to any of the preceding claims, **characterised in that** the type of coding used with said specific time structure and said basic time structure is the same, the transitions provided between the high level and the low level of the electromagnetic coding signal exchanged between said transceiver unit and said transponders or transceivers being identical for characterising a « 0 » bit and a « 1 » bit.

7. Communication method according to any of the preceding claims, **characterised in that** said initial command has said specific time structure at least in the initial portion thereof (16).

8. Communication method according to any of the preceding claims, **characterised in that** all the commands sent by said transceiver unit each have at least partially a coding (26) with said specific time structure.

9. Communication method according to claim 8,
**characterised in that** all of said commands each have said specific time structure at least in the initial portions thereof (26).

10. Communication method according to claim 8 or 9, **characterised in that** all of said commands are coded with said specific time structure.

## Patentansprüche

1. Verfahren für die Kommunikation zwischen wenigstens einer Sende-/Empfangseinheit für elektromagnetische Signale und Antworteinrichtungen oder Sender/Empfängern, die dieser Einheit zugeordnet und so beschaffen sind, dass sie von dieser Einheit wenigstens einen Anfangsbefehl (12) für die Aktivierung der Kommunikation empfangen und mit dieser Einheit codierte Informationen (14), die von Befehlen verschieden sind, austauschen, wobei der Anfangsbefehl von der Sende-/Empfangseinheit geliefert wird, um eine Wechselwirkung mit den Antworteinrichtungen oder Sender/Empfängern, die in ihren Wirkungsbereich eintreten, zu erzeugen, **dadurch gekennzeichnet, dass** der wenigstens eine Anfangsbefehl wenigstens teilweise eine Codierung mit einer bestimmten zeitlichen Struktur (16) aufweist, die von der zeitlichen Basisstruktur (14, 18), die für die Erzeugung der codierten Informationen verwendet wird, verschieden ist, wobei der wenigstens eine Anfangsbefehl von jeder Bitfolge verschieden ist, die bei der Lieferung irgendeiner der codierten Informationen durch die Sende-/Empfangseinheit auftreten kann.

2. Kommunikationsverfahren nach Anspruch 1, **dadurch gekennzeichnet, dass** die bestimmte zeitliche Struktur eine Codierungszeitperiode (P2) aufweist, die größer als die Codierungszeitperiode (P1) ist, die in der zeitlichen Basisstruktur verwendet wird.

3. Kommunikationsverfahren nach Anspruch 2, **dadurch gekennzeichnet, dass** die bestimmte zeitliche Struktur während wenigstens einer ersten zeitlichen Codierungsperiode (20; 26) einen charakteristischen elektrischen Wert aufweist, der über ein Zeitintervall (22), das größer als alle zeitlichen Längen dieses charakteristischen elektrischen Werts ist, die in jeder beliebigen Bitfolge mit der zeitlichen Basisstruktur auftreten können, konstant ist.

4. Kommunikationsverfahren nach Anspruch 3, **dadurch gekennzeichnet, dass** das Zeitintervall (22) größer oder gleich der 2,5fachen zeitlichen Codierungsperiode (P1) der zeitlichen Basisstruktur ist.

5. Kommunikationsverfahren nach Anspruch 3 oder 4, **dadurch gekennzeichnet, dass** der charakteristische elektrische Wert einem Tiefpegel des elektromagnetischen Signals zum Codieren von Befehlen und von zwischen der Sende-/Empfangs-Einheit und den Antworteinrichtungen oder Sender/Empfängern ausgetauschten Informationen entspricht.

6. Kommunikationsverfahren nach einem der vorhergehenden Ansprüche, **dadurch gekennzeichnet, dass** der mit der bestimmten zeitlichen Struktur bzw. mit der zeitlichen Basisstruktur verwendete Codierungstyp gleich ist, wobei die Übergänge, die zwischen dem Hochpegel und dem Tiefpegel des elektromagnetischen Codierungssignals vorgesehen sind, das zwischen der Sende-/Empfangseinheit und den Antworteinrichtungen oder Sender/Empfängern ausgetauscht wird, gleich sind, um ein Bit "0" und ein Bit "1" zu charakterisieren.

7. Kommunikationsverfahren nach einem der vorhergehenden Ansprüche, **dadurch gekennzeichnet, dass** der Anfangsbefehl die bestimmte zeitliche Struktur wenigstens in seinem Anfangsteil (16) aufweist.

8. Kommunikationsverfahren nach einem der vorhergehenden Ansprüche, **dadurch gekennzeichnet, dass** alle Befehle, die von der Sende-/Empfangseinheit geschickt werden, jeweils wenigstens teilweise eine Codierung (26) mit der bestimmten zeitlichen Struktur aufweisen.

9. Kommunikationsverfahren nach Anspruch 8, **dadurch gekennzeichnet, dass** alle Befehle jeweils die bestimmte zeitliche Struktur wenigstens in ihren Anfangsteilen (26) aufweisen.

10. Kommunikationsverfahren nach Anspruch 8 oder 9, **dadurch gekennzeichnet, dass** alle Befehle mit der bestimmten zeitlichen Struktur codiert sind.
